# EUROPÄISCHE PATENTSCHRIFT

(11) **EP 3 523 171 B1**
(45) Veröffentlichungstag und Bekanntmachung des Hinweises auf die Patenterteilung: **10.06.2020**
(21) Anmeldenummer: 17754627.2
(22) Anmeldetag: 31.07.2017
(51) Int. Cl.: B61D 17/02

(54) **SCHIENENFAHRZEUGBUG**
FRONT OF RAILWAY VEHICLE
VÉHICULE FERROVIAIRE

(30) Priorität: 05.10.2016 DE 102016219267
(43) Veröffentlichungstag der Anmeldung: 14.08.2019
(73) Patentinhaber: Voith Patent GmbH, 89522 Heidenheim (DE)
(72) Erfinder: LAUSCHKE, Uwe, 39110 Magdeburg (DE); ROMUND, Mathias, 21710 Engelschoff (DE); MAASS, Julian, 38304 Wolfenbüttel (DE)
(74) Vertreter: Voith Patent GmbH - Patentabteilung
(86) Internationale Anmeldenummer: PCT/EP2017/069290
(87) Internationale Veröffentlichungsnummer: WO 2018/065139

(56) Entgegenhaltungen:
- EP-A1- 2 524 850
- WO-A1-2017/021056
- DE-U1-202012 101 220

## Beschreibung

Die vorliegende Erfindung betrifft einen Schienenfahrzeugbug mit einer Zugkupplung gemäß dem Oberbegriff von Anspruch 1.

Schienenfahrzeuge für große Fahrzeuggeschwindigkeiten, sogenannte Schnellzüge, besitzen in der Front, am sogenannten Schienenfahrzeugbug, ein Klappensystem, um dem Zug eine bessere Aerodynamik im ungekuppelten Zustand zu ermöglichen. Fährt der Zug gekuppelt, das heißt wenn an dem Schienenfahrzeugbug ein anderes Fahrzeug beziehungsweise Fahrzeugteil befestigt ist, sind die Bugklappen des Klappensystems geöffnet, um eine Bugöffnung freizugeben, in welcher die Zugkupplung positioniert ist. Die Zugkupplung muss für Kurvenfahrten innerhalb der Bugöffnung in horizontaler Richtung verschwenkbar sein, wofür eine entsprechende bewegliche Anlenkung vorgesehen ist. Üblicherweise ist die Zugkupplung auch in der vertikalen Richtung beweglich beziehungsweise verschwenkbar, um Höhenunterschiede während der Fahrt oder beim Kuppeln auszugleichen. Die Zugkupplung umfasst nicht nur die notwendigen Bauteile zur mechanischen Kupplung der beiden Zugteile, sondern in der Regel auch weitere Einbauten zur Druckluftversorgung der Schienenfahrzeugteile und/oder elektrischen Versorgung der Schienenfahrzeugteile.

Obwohl die bekannten Klappensysteme somit im geschlossenen Zustand der enthaltenen Bugklappen die Aerodynamik des Schienenfahrzeugs verbessern und zugleich das Eindringen von Schmutz, Eis und Schnee in die Bugöffnung verhindern, kann in der geöffneten Position der Bugklappen Schmutz, Eis und Schnee in einen Zwischenraum zwischen der Zugkupplung und dem Bugring, der die Bugöffnung umschließt, eindringen. Dieser Zwischenraum ist nämlich notwendig, um die genannte Bewegungsfreiheit der Zugkupplung innerhalb der Bugöffnung und relativ zum Bugring zu ermöglichen.

Es wurden bereits Einhausungen für die Kupplung in Form einer festen Box mit einem manuellen oder automatischen Öffnungsmechanismus vorgeschlagen, sowie das Einhüllen der Kupplung in eine Plane aus Kunststoff oder einem Textil. Nachteilig ist dabei die vergleichsweise große Bauform der Einhausung, welche den möglichen Schwenkbereich der Zugkupplung einschränkt, und somit den Radius der mit dem Schienenfahrzeug durchfahrbaren Kurven beziehungsweise die Zugkupplungsfunktion bei spitzen Hügeln oder Senken. Wenn der Öffnungsmechanismus automatisiert ist, bedingt dies eine Vielzahl weiterer Kinematikkomponenten und eine vergleichsweise noch größere Bauform, mit der Verschärfung des zuvor genannten Problems. Die zusätzlichen Kinematikkomponenten verursachen ferner zusätzliche Kosten in der Herstellung und Wartung und müssen meist selbst gegen Umwelteinflüsse geschützt werden.

Bei den bekannten Einhausungen und Planen sind ferner nur die Anbauteile der Kupplung und die Kupplung selbst geschützt. In der vom Bugring umschlossenen Bugöffnung hingegen sind alle weiteren Komponenten und Baugruppen, wie zum Beispiel die Klappenkinematik, Ventile und Kabel usw. ungeschützt.

Alternativ zu einer mit Bugklappen verschließbaren Bugöffnung wurde bereits vorgeschlagen, den Innenraum des Bugrings mit einem fest installierten Gaiter zu schützen. Der Gaiter, den man auch als Manschette oder Schürze bezeichnen kann, besteht aus einem Stoff, einer Plane oder ähnlichem. Die Geometrie ist strömungsmechanisch ungünstig und daher ist diese Lösung für Schnellzüge nicht geeignet. Bisher kann die Lösung nur bei Schienenfahrzeugen mit einer Maximalgeschwindigkeit von bis zu 200 km/h eingesetzt werden.

Der fest installierte Gaiter verhindert das Vorsehen bekannter Bugklappen, da die notwendige Bewegung der Bugklappen durch den feststehenden Gaiter behindert würde.

Aus EP 2 524 850 A1 ist eine Vorrichtung zum bedarfsweisen Abdichten einer im Stirnbereich eines spurgeführten Fahrzeuges vorgesehenen Öffnung bekannt, welche einen Dichtkörper mit variabler Größe mit mindestens einem aufblasbaren Hohlkörper umfasst. Das System ist aufwendig aufgrund der dafür vorzusehenden Stelleinrichtungen und deren erforderlicher Ansteuerung. Eine weitere Lösung, mit dem in die Bugöffnung eindringenden Schnee und Eis umzugehen, besteht in einem Abschmelzen durch in der Bugöffnung installierte Heizungen. Die Leistung entsprechender Heizungen ist jedoch beschränkt, sodass es bei großen Schneemengen zu einer Vereisung der Zugkupplung trotz Einsatz der Heizungen kommt und die Kupplungsfunktion nicht dauerhaft aufrechterhalten werden kann. Ferner verhindern diese Heizungen nicht das Eintragen von Schmutz in die Bugöffnung.

Der vorliegenden Erfindung liegt die Aufgabe zugrunde, einen Schienenfahrzeugbug mit einer Zugkupplung anzugebenden, bei dem die bewährte Funktion wenigstens einer Bugklappe beibehalten werden kann und zusätzlich auch in der geöffneten Position der wenigstens einen Bugklappe das Eindringen von Schmutz, Schnee und Eis in die vom Bugring umschlossene, von der wenigstens einen Bugklappe freigegebene Bugöffnung verhindert wird. Die Bugklappe soll dabei die aerodynamische Funktion beibehalten und im geöffneten Zustand Schutz vor Schnee etc. bieten.

Die erfindungsgemäße Aufgabe wird durch einen Schienenfahrzeugbug mit den Merkmalen von Anspruch 1 gelöst. In den abhängigen Ansprüchen sind vorteilhafte und besonders zweckmäßige Ausgestaltungen der Erfindung angegeben.

Ein erfindungsgemäßes Schienenfahrzeug weist eine Zugkupplung sowie einen Bugring auf, der eine Bugöffnung umschließt. Die Zugkupplung ist innerhalb der Bugöffnung positioniert, derart, dass sie durch einen Bugring hindurch zugängig ist. Der Bugring ist somit die der Bugöffnung zugewandte und diese in einer stirnseitigen Draufsicht auf das vordere Zugende umschließende Endkontur der Außenhülle des Schienenfahrzeugs.

Die Bugöffnung ist mittels wenigstens einer Bugklappe verschließbar. Die wenigstens eine Bugklappe ist demgemäß zwischen einer geöffneten Position, in welcher sie die Bugöffnung zumindest teilweise zur Zugängigmachung der Zugkupplung freigibt, und einer geschlossenen Position, in welcher sie die Bugöffnung zumindest teilweise zum Abdecken der Zugkupplung verschließt, bewegbar. Wenn nur eine einzige Bugklappe vorgesehen ist, so verschließt sie in der geschlossenen Position die Bugöffnung insbesondere vollständig. Wenn mehrere Bugklappen vorgesehen sind, was die Regel ist, beispielsweise zwei Bugklappen, so verschließen diese vorteilhaft gemeinsam in ihrer geschlossenen Position die Bugöffnung und damit den Bugring vollständig.

Erfindungsgemäß ist nun zwischen der wenigstens einen Bugklappe und der Zugkupplung wenigstens ein flexibles Abschirmelement, insbesondere eine flexible Manschette bzw. Schürze vorgesehen, die in der geöffneten Position der wenigstens einen Bugklappe einen Zwischenraum zwischen der Zugkupplung und der wenigstens einen Bugklappe abdeckt.

Dabei ist das wenigstens eine flexible Abschirmelement, insbesondere die wenigstens eine flexible Manschette einerseits zumindest mittelbar oder unmittelbar an der wenigstens einen Bugklappe und andererseits im Bereich der Zugkupplung, insbesondere unmittelbar oder mittelbar an der Zugkupplung, angeschlossen. Dadurch kann bei einem Bewegen der Zugkupplung innerhalb der Bugöffnung die notwendige flexible Verformung des einzelnen Abschirmelementes bzw. der Manschette einfach erreicht werden.

Das wenigstens eine flexible Abschirmelement ist, insbesondere die wenigstens eine flexible Manschette derart angeschlossen, insbesondere unmittelbar an der wenigstens einen Bugklappe beziehungsweise an den Bugklappen und an der Zugkupplung beziehungsweise im Bereich der Zugkupplung, dass sie sich beim Bewegen der wenigstens einen Bugklappe aus deren geschlossenen Position in deren geöffnete Position aufspannt, um den durch das Öffnen der wenigstens einen Bugklappe größer werdenden beziehungsweise freiwerdenden Zwischenraum zwischen der Zugkupplung und der wenigstens einen Bugklappe zuverlässig abzudecken.

Gemäß einer Ausführungsform der Erfindung ist eine Spaltdichtung vorgesehen, welche einen Spalt zwischen der wenigstens einen Bugklappe in der geöffneten Position und dem Bugring abdichtet. Damit kann bis auf die notwendig zugänglichen Bereiche der Zugkupplung der gesamte Innenraum innerhalb des Bugrings zuverlässig gegen Umwelteinflüsse abgedichtet werden, auch im geöffneten Zustand des Schienenfahrzeugbugs, das heißt mit der wenigstens einen Bugklappe in der geöffneten Position.

Die Spaltdichtung kann beispielsweise Bürsten oder Abdichtleisten umfassen. Andere Dichtungen in flexibler oder unflexibler Ausführungsform sind möglich.

Bevorzugt ist ein einziges flexibles Abschirmelement, insbesondere eine einzige flexible Manschette beziehungsweise überhaupt eine einzige Manschette innerhalb des Bugrings vorgesehen. Auch ein einziges flexibles Abschirmelement, insbesondere eine einzige flexible Manschette kann jedoch aus mehreren stoffschlüssig und/oder formschlüssig miteinander verbundenen Segmenten bestehen. Solche Segmente sind beispielsweise aneinander vernäht oder verklebt und insbesondere unlösbar miteinander verbunden. Ferner ist es möglich mehrere zusammenwirkende Abschirmelemente, insbesondere Manschetten vorzusehen, die gemeinsam den Zwischenraum zwischen der Zugkupplung und der wenigstens einen Bugklappe abdecken. Beispielsweise überlappen nebeneinander angeordnete Abschirmelemente, insbesondere Manschetten einander, um einen Spalt zwischen den einzelnen Manschetten zu vermeiden. Das Ausmaß der Überlappung ist vorteilhaft ausreichend, um in jeder möglichen, durch eine Bewegung der wenigstens einen Bugklappe und/oder der Zugkupplung variierenden Relativposition der einander benachbarten Abschirmelemente zueinander eine minimale Überlappung sicherzustellen. Alternativ können die Abschirmelemente auch ohne Überlappung nebeneinander angeordnet sein, bevorzugt jedoch so dicht, dass ein Spalt zwischen diesen vermieden wird oder mit einer zusätzlichen Spaltabdeckung.

Das Abschirmelement, insbesondere die einzelne Manschette ist bevorzugt aus einem vollflächig dichten beziehungsweise geschlossenen Material hergestellt. Prinzipiell ist jedoch auch eine Ausführungsform mit kleinen Öffnungen, beispielsweise in Form eines Netzes vorstellbar, solange die gewünschte Behinderung des Eindringens von Schmutz und/oder Eis in die Bugöffnung in ausreichendem Maße vermieden wird.

In der Regel wird das wenigstens eine flexible Abschirmelement, insbesondere die wenigstens eine flexible Manschette in der geschlossenen Position der wenigstens einen Bugklappe vollständig von der Bugklappe innerhalb der Bugöffnung abgedeckt. Das bedeutet, dass die wenigstens eine Manschette im geschlossenen Zustand der wenigstens einen Bugklappe von außerhalb des Schienenfahrzeugbugs nicht oder allenfalls durch einen verbleibenden kleinen Spalt sichtbar ist.

Bevorzugt ist das wenigstens eine flexible Abschirmelement, insbesondere die wenigstens eine flexible Manschette dicht an der Zugkupplung angeschlossen. Beispielsweise ist die Manschette bei einer Blickrichtung von vorne in die Bugöffnung hinein seitlich an der Zugkupplung oder auf der Rückseite der Zugkupplung angeschlossen.

Besonders vorteilhaft weist das wenigstens eine flexible Abschirmelement, insbesondere die wenigstens eine flexible Manschette aufeinander gelegte Abschnitte oder Falten zum Ausgleich von Dehnungsbewegungen des einzelnen Abschirmelementes auf. Wenn sich der Zwischenraum zwischen der Zugkupplung und der entsprechenden Bugklappe beim Öffnen der Bugklappe vergrößert, so wird dieser durch die Dehnung beziehungsweise das Auseinanderfalten der flexiblen Manschette trotzdem sicher abgedeckt. Zusätzlich oder alternativ ist es prinzipiell vorstellbar, dass die flexible Manschette aus einem elastischen Material hergestellt ist.

Bevorzugt ist das flexible Abschirmelement zumindest teilweise als Faltenbalg ausgeführt, der demgemäß eine entsprechende Dehnungsreserve zur Verfügung stellt. Der Faltenbalg ist beispielsweise als elastischer, sich selbsttätig zusammenziehender Faltenbalg ausgeführt.

Das flexible Abschirmelement, insbesondere die flexible Manschette weist gemäß einer besonders vorteilhaften Ausgestaltung der Erfindung leistenförmige oder drahtförmige oder auch anders gestaltete Verstärkungen zur Ausbildung einer vorgegebenen Kontur und/oder zur Sicherstellung einer vorgegebenen Verformungsbewegung auf. Beispielsweise zwingen federgespannte Stahlseile oder andere geeignete Vorrichtungen Abschnitte des Abschirmelementes/ der Manschette in bestimmte Richtungen, sodass sich das Abschirmelement / die Manschette in der gewünschten Art und Weise faltet beziehungsweise bewegt und die Funktion der wenigstens einen Bugklappe, von deren Kinematik und der Kupplung, nicht beeinträchtigt wird.

Bei Vorsehen einer Spaltdichtung zwischen dem Bugring und der wenigstens einen Bugklappe, und eventuell bei einer mehrteiligen Manschette auch zwischen den einzelnen Manschettenteilen können diese Spaltdichtungen die Spalte vollständig abdichten oder teilweise verengen.

Das wenigstens eine flexible Abschirmelement, insbesondere die wenigstens eine flexible Manschette kann beispielsweise aus einem textilen Stoff, einer Plane oder einem Gummimaterial hergestellt sein. Beispielsweise sind jeweils oberhalb und unterhalb der Zugkupplung sowie links und rechts der Zugkupplung, bei einer Draufsicht von vorne auf den Bugring, Manschettensegmente oder einzelne Abschirmelemente vorgesehen.

Bei einem mehrteiligen Abschirmelement, insbesondere mehrteiligen Manschette können die Falten derart gewählt werden, dass sich diese entsprechenden Abschnitte gegeneinander falten können.

Bevorzugt ist durch die Positionierung des wenigstens einen Abschirmelementes, insbesondere der wenigstens einen Manschette nur der mechanische Kupplungsbereich sowie insbesondere der elektrische Kupplungsbereich der Zugkupplung und insbesondere ein Kupplungsbereich für einen Druckluftanschluss von außerhalb der Bugöffnung zugängig. Alle anderen Bauteile, insbesondere Kupplungsstange, Federgelenk, Steuerungstechnik und Kinematik der Zugkupplung und/oder der wenigstens einen Bugklappe, sind vorteilhaft durch die wenigstens eine Manschette gegenüber der Umgebung außerhalb der Bugöffnung abgedeckt.

Gemäß einer besonderen Ausgestaltung der Erfindung umfasst die genannte Spaltdichtung zwischen der wenigstens einen Bugklappe und dem Bugring beziehungsweise zwischen einzelnen Abschirmelementen aufblasbare Gummischläuche.

Im Unterschied zu dem wenigstens einen flexiblen Abschirmelementes ist die wenigstens eine Bugklappe vorteilhaft aus einem steifen, das heißt verformungssteifen "harten" Material hergestellt.

Die wenigstens eine flexible Manschette ist bevorzugt auf der Innenseite, das heißt der der Bugöffnung zugewandten Oberfläche der wenigstens einen Bugklappe angeschlossen.

Es versteht sich, dass bei Vorhandensein mehrere Bugklappen, entweder zwischen der Kupplung und jeder Bugklappe ein flexibles Abschirmelement vorgesehen ist oder aber ein flexibles Abschirmelement, welches kupplungsseitig in Umfangsrichtung um die Kupplung angeordnet ist und im bugklappenseitigen Endbereich jeweils mit einzelnen Abschnitten mit den einzelnen Bugklappen verbunden ist.

Die Erfindung soll nachfolgend anhand von Ausführungsbeispielen und den Figuren exemplarisch beschrieben werden.

Es zeigen:
- Figur 1: ein Schienenfahrzeug mit einem erfindungsgemäß ausgeführten Schienenfahrzeugbug;
- Figur 2: eine schematische Darstellung des Schienenfahrzeugbugs aus der Figur 1 mit geöffneten Bugklappen in einer Ansicht von vorne auf die Bugöffnung;
- Figur 3: eine Ansicht von der Seite auf den Schienenfahrzeugbug gemäß den Figuren 1 und 2 mit geöffneten Bugklappen;
- Figur 4: eine schematische Darstellung zur Verdeutlichung der geschlossenen und der geöffneten Position der Bugklappen und der entsprechenden Verformung der flexiblen Manschette;
- Fig. 5 bis 8: mögliche Gestaltungen der flexiblen Manschette mit unterschiedlichen Faltenanordnungen.

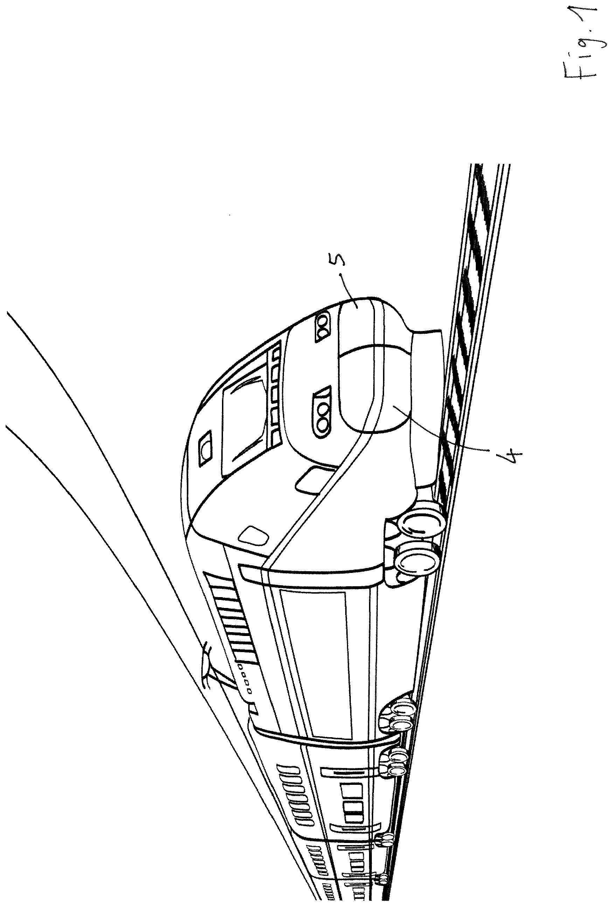

In der Figur 1 ist ein Schienenfahrzeug mit einem Schienenfahrzeugbug dargestellt, dessen beide Bugklappen 4, 5 in der geschlossenen Position sind, um eine Bugöffnung vollständig zu verschließen.

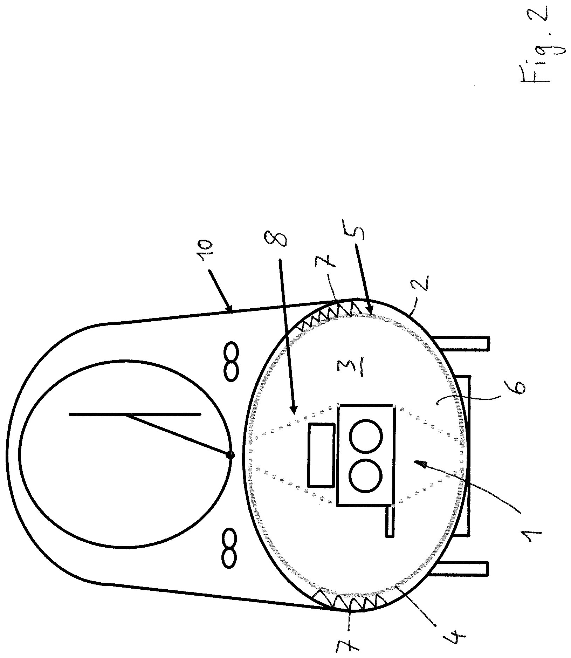

In der Figur 2 sind die Bugklappen 4, 5 in der geöffneten Position gezeigt. Sie geben eine Bugöffnung 3 innerhalb der Kontur 10 des Schienenfahrzeugbugs frei. Die Bugöffnung 3 wird vom sogenannten Bugring 2 umschlossen, derart, dass über den Bugring 2 ein Zugriff auf die Zugkupplung 1 möglich ist, um verschiedene Schienenfahrzeugteile beziehungsweise deren jeweiligen Bug aneinander zu koppeln. Die Zugkupplung 1 weist beispielsweise eine mechanische Kupplung mit eingebauter Elektrokontaktkupplung auf, wobei das zwischen den Bugklappen 4, 5 und der Zugkupplung 1 vorgesehene flexible Abschirmelement, insbesondere die Manschette 6 diese Bauteile der Zugkupplung 1 freigibt und alle anderen Bauteile in der Bugöffnung 3 sicher gegen Eindringen von Schmutz, Eis und Schnee oder dergleichen abdeckt.

Um die Bewegungsfähigkeit beziehungsweise Schwenkfähigkeit der Zugkupplung 1 in horizontaler Richtung und insbesondere in vertikaler Richtung unbeschränkt zu gewährleisten, ist die Manschette 6 beispielsweise durch Vorsehen von Falten 8 derart flexibel, dass Dehnungen einzelner Bereiche des flexiblen Abschirmelementes / der flexiblen Manschette 6 ohne beziehungsweise mit minimalem Kraftaufwand möglich sind.

Zur gewünschten Abdichtung der Bugöffnung 3 können, wie in der Figur 2 schematisch angedeutet ist, Spaltdichtungen 7 vorgesehen sein, die den sich ergebenden Spalt zwischen den Bugklappen 4, 5 und dem Bugring 2 in der geöffneten Position der Bugklappen 4, 5 abdichten.

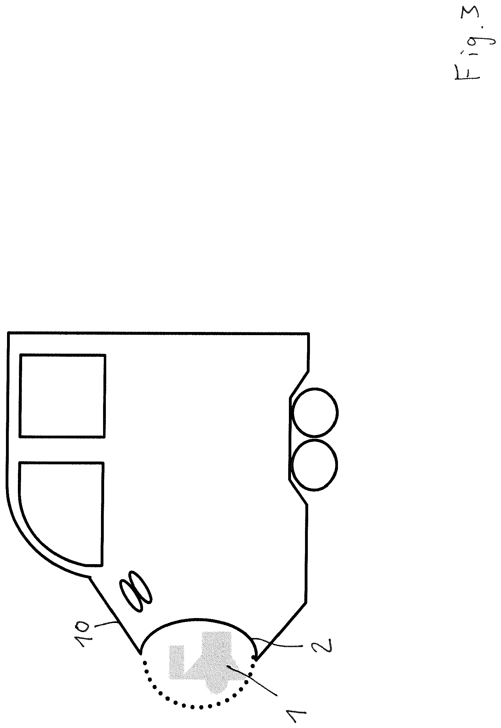

In der Figur 3 ist exemplarisch dargestellt, dass sich die Zugkupplung 1 auch aus der Bugöffnung 3 heraus über den Bugring 2 nach vorne hinaus aus der Kontur 10 des Schienenfahrzeugbugs erstrecken kann. Dementsprechend stehen auch die Bugklappen in ihrer geschlossenen Position nach vorne über den Bugring 2 hinaus, wie durch die gepunktete Linie angedeutet ist.

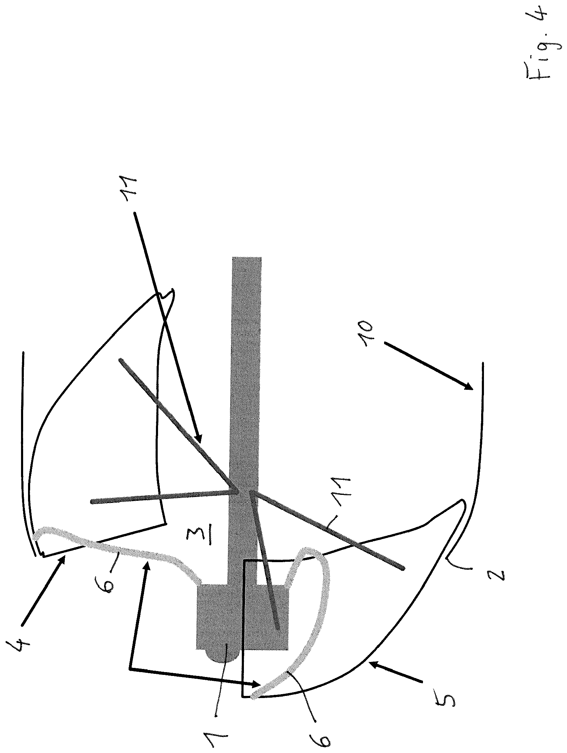

In der Figur 4 ist zum besseren Verständnis die Bugklappe 4 in ihrer geöffneten Position und die Bugklappe 5 in ihrer geschlossenen Position dargestellt. Mit 11 ist die Kinematik der Bugklappen 4, 5 bezeichnet, beispielsweise umfassend ein Gestänge und geeignete Aktuatoren.

Die Manschette 6 wird beim Öffnen der Bugklappen 4, 5 verformt aus einem weitgehend zusammengefalteten beziehungsweise schlaufenförmigen Zustand in einen weitgehend entfalteten Zustand. Die Funktion der Bugklappenkinematik 11 wird durch die Manschette 6 nicht behindert.

Das Faltern und Entfalten der flexiblen Manschette 6 erfolgt allein durch Bewegen der Bugklappen 4, 5 aus der geöffneten Position in die geschlossene Position beziehungsweise umgekehrt. Ein zusätzlicher Antrieb oder Aktuator für die flexible Manschette 6 ist nicht vorgesehen.

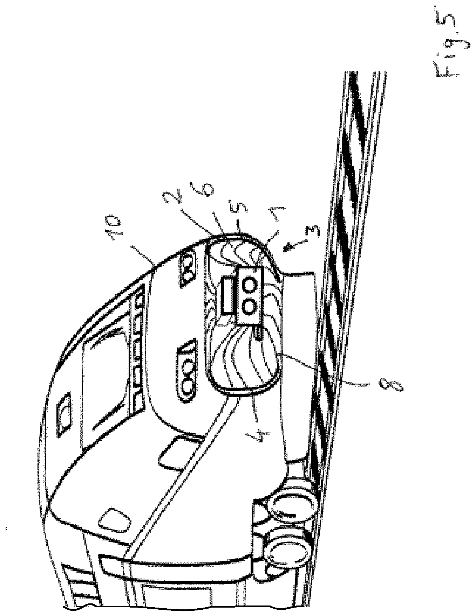

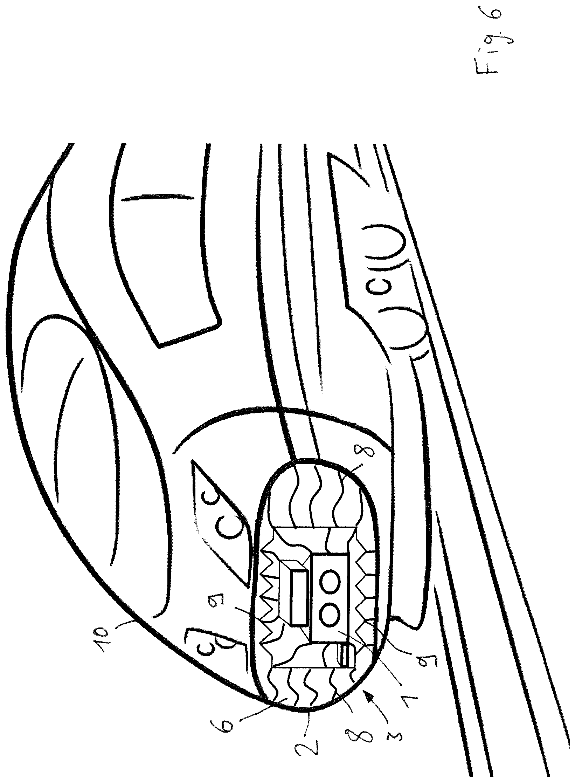

In der Figur 5 weist die flexible Manschette 6 eine Vielzahl von Falten 8 auf, die sich im Wesentlichen in Radialrichtung um die Zugkupplung 1 herum erstrecken. Bei der Ausgestaltung gemäß der Figur 6 sind neben sich im Wesentlichen horizontal erstreckenden Falten 8 als Faltenbalg 9 ausgeführte Abschnitte der Manschette 6 vorgesehen. Ein solcher Faltenbalg 9 weist eine Fächerung auf, die eine besonders große Horizontalbewegung der Zugkupplung 1 ermöglicht. Beispielsweise weist jeder Faltenbalg 9 drei, vier oder mehr Falten auf.

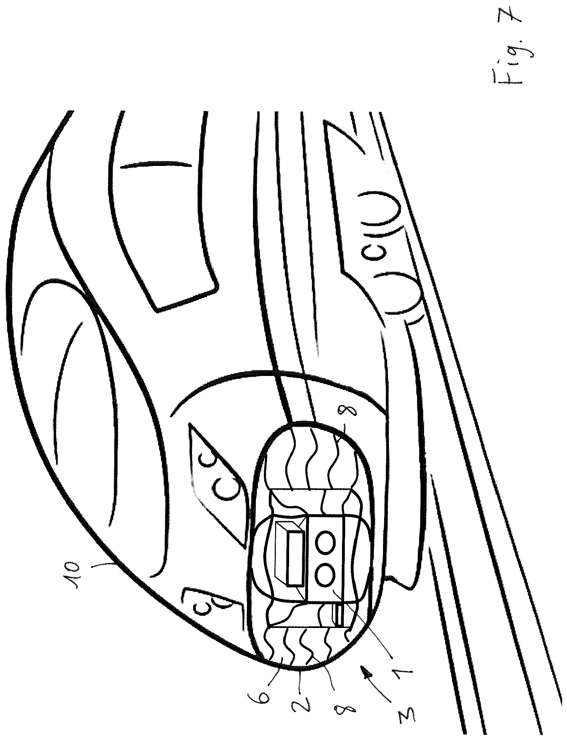

In der Figur 7 ist eine flexible Manschette 6 mit geänderter Faltenanordnung gezeigt. Auch hier erstrecken sich einige Falten 8 weitgehend in der Horizontalrichtung. Ober- und unterhalb der Zugkupplung 1 sind jedoch vergleichsweise größere aufeinander gelegte Abschnitte der Manschette 6 vorgesehen, die sich besonders in der Horizontalrichtung, jedoch auch in der Vertikalrichtung, relativ zueinander bewegen können.

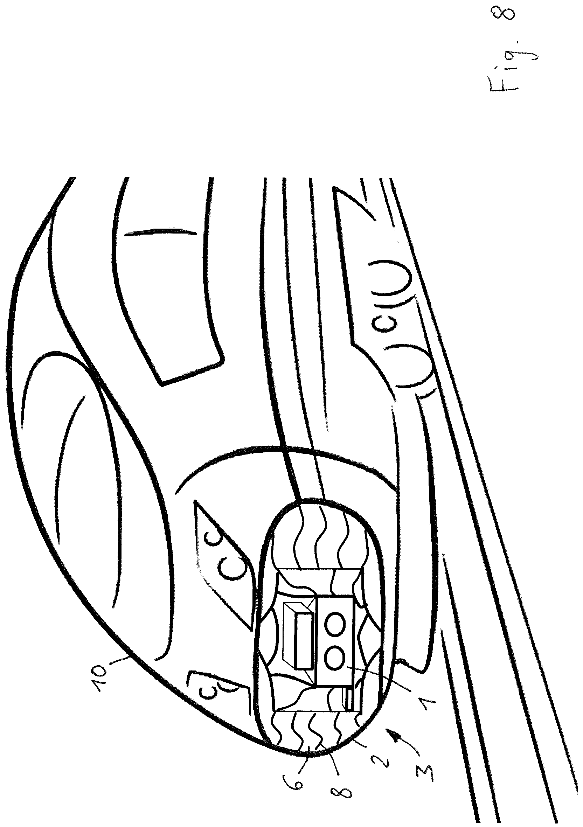

In der Figur 8 ist eine weitere mögliche Variante der Faltenlegung der flexiblen Manschette 6 gezeigt. Auch hier überwiegt eine horizontale Ausrichtung der Falten 8.

## Patentansprüche

1. Schienenfahrzeugbug
1.1 mit einer Zugkupplung (1),
1.2 mit einem Bugring (2), der eine Bugöffnung (3) umschließt, in welcher die Zugkupplung (1) positioniert ist;
1.3 mit wenigstens einer Bugklappe (4, 5), die zwischen einer geöffneten Position, in welcher sie die Bugöffnung (3) zumindest teilweise zur Zugängigmachung der Zugkupplung (1) freigibt, und einer geschlossenen Position, in welcher sie die Bugöffnung (3) zumindest teilweise zur Abdeckung der Zugkupplung (1) verschließt, bewegbar ist, wobei zwischen der wenigstens einen Bugklappe (4, 5) und der Zugkupplung (1) wenigstens ein flexibles Abschirmelement, insbesondere wenigstens eine flexible Manschette bzw. Schürze (6) vorgesehen ist, die in der geöffneten Position der wenigstens einen Bugklappe (4, 5) einen Zwischenraum zwischen der Zugkupplung (1) und der wenigsten einen Bugklappe (4, 5) abdeckt, **dadurch gekennzeichnet, dass** das wenigstens ein flexibles Abschirmelement, insbesondere flexible Manschette (6) einerseits zumindest mittelbar an der wenigstens einen Bugklappe (4, 5) und andererseits im Bereich der Zugkupplung (1) oder an der Zugkupplung (1) derart angeschlossen ist, dass sie sich beim Bewegen der wenigstens einen Bugklappe (4, 5) aus der geschlossenen Position in die geöffnete Position aufspannt.

2. Schienenfahrzeugbug gemäß Anspruch 1,
**dadurch gekennzeichnet,**
**dass** eine Vielzahl von entsprechend bewegbaren Bugklappen (4, 5), insbesondere genau zwei Bugklappen (4, 5), vorgesehen ist/sind, und das wenigstens eine flexible Abschirmelement, insbesondere die wenigstens eine flexible Manschette (6) in der geöffneten Position der Bugklappen (4, 5) den Zwischenraum zwischen allen Bugklappen (4, 5) und der Zugkupplung (1) abdeckt.

3. Schienenfahrzeugbug gemäß einem der Ansprüche 1 bis 2,
**dadurch gekennzeichnet,**
**dass** eine Spaltdichtung (7) vorgesehen ist, welche einen Spalt zwischen der wenigstens einen Bugklappe (4, 5) in der geöffneten Position und dem Bugring (2) abdichtet.

4. Schienenfahrzeugbug gemäß Anspruch 3,
**dadurch gekennzeichnet,**
**dass** die Spaltdichtung (7) Bürsten, Abdichtleisten und/oder einen aufblasbaren Schlauch umfasst.

5. Schienenfahrzeugbug gemäß einem der Ansprüche 1 bis 4,
**dadurch gekennzeichnet,**
**dass** das einzelne flexible Abschirmelement, insbesondere flexible Manschette (6) aus mehreren stoffschlüssig und/oder formschlüssig miteinander verbundenen Segmenten besteht.

6. Schienenfahrzeugbug gemäß einem der Ansprüche 1 bis 5,
**dadurch gekennzeichnet,**
**dass** ein einziges flexibles Abschirmelement, insbesondere eine einzige flexible Manschette (6) vorgesehen ist.

7. Schienenfahrzeugbug gemäß Anspruch 5 oder 6,
**dadurch gekennzeichnet,**
**dass** die Segmente miteinander vernäht oder verklebt sind.

8. Schienenfahrzeugbug gemäß einem der Ansprüche 1 bis 7,
**dadurch gekennzeichnet,**
**dass** das einzelne flexible Abschirmelement, insbesondere flexible Manschette (6) in der geschlossenen Position der wenigstens einen Bugklappe (4, 5) vollständig von der Bugklappe (4, 5) innerhalb der Bugöffnung (3) abgedeckt wird.

9. Schienenfahrzeugbug gemäß einem der Ansprüche 1 bis 8,
**dadurch gekennzeichnet,**
**dass** das einzelne flexible Abschirmelement, insbesondere flexible Manschette (6) dicht an der Zugkupplung (1) angeschlossen ist.

10. Schienenfahrzeugbug gemäß einem der Ansprüche 1 bis 9,
**dadurch gekennzeichnet,**
**dass** das einzelne flexible Abschirmelement, insbesondere flexible Manschette (6) aufeinander gelegte Abschnitte oder Falten (8) zum Ausgleich von Dehnungsbewegungen umfasst.

11. Schienenfahrzeugbug gemäß einem der Ansprüche 1 bis 10,
**dadurch gekennzeichnet,**
**dass** das einzelne flexible Abschirmelement, insbesondere flexible Manschette (6) zumindest teilweise als Faltenbalg (9) ausgeführt ist.

12. Schienenfahrzeugbug gemäß Anspruch 11,
**dadurch gekennzeichnet,**
**dass** der Faltenbalg (9) als elastischer, sich selbsttätig zusammenziehender Faltenbalg (9) ausgeführt ist.

13. Schienenfahrzeugbug gemäß einem der Ansprüche 1 bis 12,
**dadurch gekennzeichnet,**
**dass** das einzelne flexible Abschirmelement, insbesondere flexible Manschette (6) leistenförmige und/oder drahtförmige Verstärkungen zur Ausbildung einer vorgegebenen Kontur und/oder zur Sicherstellung einer vorgegebenen Verformungsbewegung aufweist.

14. Schienenfahrzeugbug gemäß einem der Ansprüche 1 bis 13,
**dadurch gekennzeichnet,**
**dass** die wenigstens eine Bugklappe (4, 5) aus einem verformungssteifen Material hergestellt ist.

## Claims

1. Rail vehicle nose
1.1 having a train coupling (1),
1.2 having a nose ring (2) which encloses a nose opening (3) in which the train coupling (1) is positioned;
1.3 having at least one nose flap (4, 5) which is movable between an open position, in which it at least partially frees the nose opening (3) to allow access to the train coupling (1), and a closed position, in which it at least partially closes the nose opening (3) to cover the train coupling (1), wherein at least one flexible shielding element, in particular at least one flexible sleeve or apron (6), is provided between the at least one nose flap (4, 5) and the train coupling (1) and, in the open position of the at least one nose flap (4, 5), covers an interspace between the train coupling (1) and the at least one nose flap (4, 5), **characterized in that** the at least one flexible shielding element, in particular the flexible sleeve (6), is, on the one hand, connected at least indirectly to the at least one nose flap (4, 5), and, on the other hand, is connected in the region of the train coupling (1) or to the train coupling (1), in such a way that it stretches out during movement of the at least one nose flap (4, 5) from the closed position into the open position.

2. Rail vehicle nose according to Claim 1,
**characterized**
**in that** a multiplicity of correspondingly movable nose flaps (4, 5), in particular exactly two nose flaps (4, 5), are provided, and, in the open position of the nose flaps (4, 5), the at least one flexible shielding element, in particular the at least one flexible sleeve (6), covers the interspace between all nose flaps (4, 5) and the train coupling (1) .

3. Rail vehicle nose according to either of Claims 1 and 2,
**characterized**
**in that** a gap seal (7) is provided which seals a gap between the at least one nose flap (4, 5) in the open position and the nose ring (2).

4. Rail vehicle nose according to Claim 3,
**characterized**
**in that** the gap seal (7) comprises brushes, sealing strips and/or an inflatable hose.

5. Rail vehicle nose according to one of Claims 1 to 4,
**characterized**
**in that** the individual flexible shielding element, in particular the flexible sleeve (6), consists of a plurality of segments which are connected to one another in an integrally bonded and/or form-fitting manner.

6. Rail vehicle nose according to one of Claims 1 to 5,
**characterized**
**in that** a single flexible shielding element, in particular a single flexible sleeve (6), is provided.

7. Rail vehicle nose according to Claim 5 or 6, **characterized**
**in that** the segments are stitched or adhesively bonded to one another.

8. Rail vehicle nose according to one of Claims 1 to 7,
**characterized**
**in that**, in the closed position of the at least one nose flap (4, 5), the individual flexible shielding element, in particular the flexible sleeve (6), is completely covered by the nose flap (4, 5) within the nose opening (3).

9. Rail vehicle nose according to one of Claims 1 to 8,
**characterized**
**in that** the individual flexible shielding element, in particular the flexible sleeve (6), is connected tightly to the train coupling (1).

10. Rail vehicle nose according to one of Claims 1 to 9,
**characterized**
**in that** the individual flexible shielding element, in particular the flexible sleeve (6), comprises portions or folds (8) which are laid on one another and intended for compensating for expansion movements.

11. Rail vehicle nose according to one of Claims 1 to 10,
**characterized**
**in that** the individual flexible shielding element, in particular the flexible sleeve (6), is at least partially configured as a corrugated bellows (9).

12. Rail vehicle nose according to Claim 11, **characterized**
**in that** the corrugated bellows (9) is configured as an elastic, automatically contracting corrugated bellows (9).

13. Rail vehicle nose according to one of Claims 1 to 12,
**characterized**
**in that** the individual flexible shielding element, in particular the flexible sleeve (6), has reinforcements in the form of strips and/or wires to form a predetermined contour and/or to ensure a predetermined deformation movement.

14. Rail vehicle nose according to one of Claims 1 to 13,
**characterized**
**in that** the at least one nose flap (4, 5) is produced from a deformation-resistant material.

## Revendications

1. Nez de véhicule ferroviaire, comprenant
1.1 un attelage de traction (1),
1.2 un anneau avant (2) entourant une ouverture avant (3) dans laquelle est positionné l'attelage de traction (1) ;
1.3 au moins une trappe avant (4, 5) pouvant être déplacée entre une position ouverte, dans laquelle elle libère l'ouverture avant (3) au moins en partie afin de rendre accessible l'attelage de traction (1), et une position fermée, dans laquelle elle ferme l'ouverture avant (3) au moins en partie pour recouvrir l'attelage de traction (1),
dans lequel, entre ladite au moins une trappe avant (4, 5) et l'attelage de traction (1) est prévu au moins un élément de protection flexible, en particulier au moins un manchon ou tablier flexible (6), qui recouvre dans la position ouverte de ladite au moins une trappe avant (4, 5) un intervalle entre l'attelage de traction (1) et ladite au moins une trappe avant (4, 5),
**caractérisé en ce que** ledit au moins un élément de protection flexible, en particulier le manchon flexible (6), est raccordé d'une part au moins indirectement à ladite au moins une trappe avant (4, 5) et d'autre part au niveau de l'attelage de traction (1) ou à l'attelage de traction (1) de telle sorte qu'il se déploie de la position fermée à la position ouverte lors d'un mouvement de ladite au moins une trappe avant (4, 5).

2. Nez de véhicule ferroviaire selon la revendication 1, **caractérisé en ce qu'**une pluralité de trappes avant (4, 5) pouvant être déplacées de manière correspondante, en particulier exactement deux trappes avant (4, 5), est prévue, et ledit au moins un élément de protection flexible, en particulier ledit au moins un manchon flexible (6) recouvre dans la position ouverte de la trappe avant (4, 5) l'intervalle entre toutes les trappes avant (4, 5) et l'attelage de traction (1).

3. Nez de véhicule ferroviaire selon l'une quelconque des revendications 1 et 2, **caractérisé en ce qu'**un joint d'étanchéité (7) est prévu qui recouvre un interstice entre ladite au moins une trappe avant (4, 5) dans la position ouverte et l'anneau avant (2).

4. Nez de véhicule ferroviaire selon la revendication 3, **caractérisé en ce que** le joint d'étanchéité (7) comprend des brosses, des bourrelets d'étanchéité et/ou un tuyau gonflable.

5. Nez de véhicule ferroviaire selon l'une quelconque des revendications 1 à 4, **caractérisé en ce que** l'élément de protection flexible individuel, en particulier le manchon flexible (6), est composé de plusieurs segments reliés entre eux par liaison de matière et/ou par complémentarité de forme.

6. Nez de véhicule ferroviaire selon l'une quelconque des revendications 1 à 5, **caractérisé en ce qu'**un seul élément de protection flexible, en particulier un seul manchon flexible (6), est prévu.

7. Nez de véhicule ferroviaire selon la revendication 5 ou 6, **caractérisé en ce que** les segments sont cousus ou collés ensemble.

8. Nez de véhicule ferroviaire selon l'une quelconque des revendications 1 à 7, **caractérisé en ce que** l'élément de protection flexible individuel, en particulier le manchon flexible (6) dans la position fermée de ladite au moins une trappe avant (4, 5) est recouvert complètement par la trappe avant (4, 5) à l'intérieur de l'ouverture avant (3).

9. Nez de véhicule ferroviaire selon l'une quelconque des revendications 1 à 8, **caractérisé en ce que** l'élément de protection flexible individuel, en particulier le manchon flexible (6), est raccordé de manière étanche à l'attelage de traction (1).

10. Nez de véhicule ferroviaire selon l'une quelconque des revendications 1 à 9, **caractérisé en ce que** l'élément de protection flexible individuel, en particulier le manchon flexible (6), comprend des portions ou plis (8) superposés pour compenser des mouvements de dilatation.

11. Nez de véhicule ferroviaire selon l'une quelconque des revendications 1 à 10, **caractérisé en ce que** l'élément de protection flexible individuel, en particulier le manchon flexible (6), est réalisé au moins en partie sous forme de soufflet (9).

12. Nez de véhicule ferroviaire selon la revendication 11, **caractérisé en ce que** le soufflet (9) est réalisé sous la forme d'un soufflet élastique (9) qui se contracte automatiquement.

13. Nez de véhicule ferroviaire selon l'une quelconque des revendications 1 à 12, **caractérisé en ce que** l'élément de protection flexible individuel, en particulier le manchon flexible (6), présente des renforts en forme de baguette et/ou de fils de fer pour réaliser un contour spécifié et/ou pour assurer un mouvement de déformation spécifié.

14. Nez de véhicule ferroviaire selon l'une quelconque des revendications 1 à 13, **caractérisé en ce que** ladite au moins une trappe avant (4, 5) est fabriquée à partir d'un matériau résistant à la déformation.
